# EUROPEAN PATENT APPLICATION

(11) **EP 2 644 155 A1**
(43) Date of publication of application: **02.10.2013**
(21) Application number: 12161425.9
(22) Date of filing: 27.03.2012
(51) Int. Cl.: A61C 13/00, A61C 9/00

(54) **Method and device for scanbody aided immediacy for manufacturing a dental prosthesis for a dental implant**

(71) Applicant: Straumann Holding AG, 4002 Basel (CH)
(72) Inventor: Behrend, Cornelius, 09111 Chemnitz (DE)
(74) Representative: Modiano, Micaela Nadia

(57) **Abstract**

The present invention relates to a method and a device for manufacturing a provisional or a final dental prosthesis (9) for a dental implant, comprising the following steps:
- receiving 3D surface scan data (1) from a scanning of a surface of a patient's oral cavity in an area of interest for a treatment;
- receiving volume scan data (2) of a respective upper or lower jaw;
- registering the 3D surface scan data (1) with the volume scan data (2), obtaining virtual 3D model data;
- selecting a virtual implant and virtually positioning the virtual implant within first virtual data (3) representing the virtual 3D model data, obtaining second virtual data (4);
- selecting and associating a virtual scanbody (VS) with the top of the virtual implant within the second virtual data (4), obtaining third virtual data (5);
- virtually removing the virtual implant and the volume scan data (2) from the third virtual data (5) and extracting information relative to the virtual scanbody (VS) and the 3D scan surface, such as to obtain fourth virtual data (6) representing merged information of the 3D surface scan data (1) and the virtual scanbody (VS);
- providing the fourth virtual data (6) for the design of the provisional or the final prosthesis (9), wherein the prosthesis (9) can be designed based on information incorporated by the virtual scanbody (VS) by use of a suitable CAD software.

## Description

### Field of the Invention

The present invention relates to a method for manufacturing a dental prosthesis for a dental implant preferably before an actual implantation of the dental implant.

### Background of the Invention

Prior art of current manufacturing methods for a dental prosthesis implies always a first implantation of the dental implant in a jawbone. After the implantation of the dental implant a scanbody is preferably connected to the dental implant, whereupon a 3D surface scan of an area of interest can be made with an intraoral scanner. The intraoral scanner performs an optical scanning of the surface of remaining teeth and gum and of the scanbody which is connected to the dental implant, the scan body having a visible end poking out of the gum. The visible end of the scanbody has a defined shape which is indicative of an exact position, direction and rotation of the dental implant as well as of the implant type which may be standard, wide neck, regular neck and the like. After having scanned a patient's oral cavity with the remaining teeth and the scanbody, respective 3D surface scan data is obtained, the 3D surface scan data representing a digital imprint of the patient's mouth including the scanbody. A system which provides for a scanned digital imprint of the patient's mouth is commercially available under the trade name i-Tero ® from Cadent Ltd.

The obtained 3D surface scan data, which is a virtual imprint data of the patient, is used to generate a provisional prosthesis or a final prosthesis by means of a CAD system, as for instance CARES ® CAD system of Institut Straumann AG. Said CAD system renders the obtained 3D surface scan data visible as a virtual model which includes an occlusion of opposite teeth of the respective upper or lower jaw, such that the provisional prosthesis or the final prosthesis can be formed virtually, either automatically, manually or semi-automatically.

Preferably a physical model derived from the virtual impression data is then manufactured by means of a CAD-CAM process, as known in the art. The physical model with the scanbody is then used to reproduce the position, direction and rotation of the dental implant and to insert an implant analog therein, as is also known in the art. Preferably a repositionable implant analog, as described in DE 10 2010 021 601 A1, may be used. Subsequently, the provisional prosthesis or the final one can be produced, as is also known in the art. Basically, the production of the provisional prosthesis is similar to that of the final prosthesis except for the fact that the final prosthesis is produced with a higher precision, possibly with different dimensions and possibly with a different material.

Another known prior art method for obtaining an imprint of the patient's jaw is by making a real imprint of the patient's jaw with teeth and an imprint coping connected to a dental implant. As is known in the art, the surfaces and a shape of the imprint coping for a real imprint are different from the surfaces and shape of scanbody used for the optical 3D surface scan.

However, no provisional prosthesis or no final prosthesis is available immediately after the implantation of the dental implant in the patient's jaw. In other words, the dental implant and the dental prosthesis, be it provisional or final, cannot be provided in the course of the same treatment session by the dentist. Therefore, a provisional cap has to be placed over the freshly implanted dental prosthesis, such provisional cap being easily observable, having a negative esthetic impact, a reduced bite force and being more difficult to adapt to the implant and the gum than a provisional or final prosthesis. Accordingly, it would be desirable for a provisional prosthesis or a final prosthesis fitting to the implant, to the surrounding gum and to the neighboring teeth to be immediately available even independently from the step of an actual surgical insertion of a corresponding underlying, physical implant. In this way, the patient would be spared additional sessions with the dentist entailing additional travel time and costs. Also the inconveniences described above entailed by a provisional cap would be avoided.

### Disclosure of the invention

The above objectives as well as further objectives which will also become apparent from the following description are achieved by a method and a device for manufacturing a provisional or final dental prosthesis for a dental implant as defined in independent claims 1 and 12, respectively.

Additional advantageous features and characteristics of the invention are set out in the dependent claims.

The advantages of the present invention can be depicted as follows. In the present dental implant dentistry, prior art methods are already available for manufacturing a dental prosthesis by means of a CAD-CAM process based on a 3D surface scan of the patient's oral cavity with a scanbody, the scanbody being connected to an inserted dental implant. The present invention takes advantage of the existing prior art tools, such as the 3D surface scanner, of standard data formats for the 3D surface scan data including data of a scanbody and of CAM machinery for manufacturing a physical model and ultimately the provisional or the final prosthesis. Thus, very elaborate and precise methods and tools for an acquisition of respective dental imprint data, virtually via the 3D surface scan or physically via a physical imprint, are available and can be used as well for the manufacturing of the provisional prosthesis or the final prosthesis. Furthermore, respective software and hardware tools, such as for instance CARES ® and i-Tero ®, are already widespread and in use for an acquisition of the 3D surface scan data and for planning purposes for the dental implant within volume scan data such as CT-/DVT data, such that the method according to the present invention is easily applicable in conjunction with such acquisition and planning tool. The method according to the present invention envisages a pre-operative design and manufacturing of the provisional prosthesis or of the final prosthesis which is then available during the same treatment session at the dentist when the dental implant is also inserted. This is obviously much more efficient and cost-effective than the methods of the prior art.

The present invention is also particularly advantageous and efficient by using the planning data of the position and direction of a dental implant made by means of CAD software, wherein the volume scan data and the 3D surface scan data is already available. According to the invention virtual data is generated, the virtual data comprising the volume scan data of the jawbone with the planned virtual dental implant and a virtual imprint of the teeth, wherein a virtual scanbody is easily associable with the virtual dental implant. By means of a simple subtraction of the virtual dental implant and of the volume scan data, the present invention provides for remaining virtual data, such remaining virtual data being comprised of 3D surface scan data with the virtual scanbody. The remaining virtual data allows a very effective and efficient manufacturing of the provisional prosthesis or the final prosthesis almost as a by-product of the planned position of the dental prosthesis. In particular, the provisional or final prosthesis can be designed based on information incorporated by the virtual scanbody by use of a suitable CAD software, inasmuch as the virtual scanbody includes all relevant information on the underlying dental implant and allows the reconstruction of the virtual implant. As known in the art, the relevant information on the underlying implant is comprised of position, direction and rotation of the dental implant in the implanted state as well as the type of implant (standard, wide neck, regular neck and the like). The reconstructed virtual implant is used as a basis for designing the prosthesis. Alternatively, a virtual abutment may be provided on top of the reconstructed implant as an interface to the prosthesis. The provisional prosthesis or the final prosthesis of the invention can be manufactured in a cost- and time-effective manner by using known methods for the fully digital virtual design of the prosthesis by means the CAD software, such as for instance CARES ®, in combination with one of the already available dental CAM milling machines, such as for instance from STRAUMANN or ROLAND. The 3D surface scan data including the virtual scanbody can be transmitted to a manufacturing unit for instance via the Internet. There the provisional or the final prosthesis can be instantly and automatically manufactured. According to the invention the virtual scanbody can have any shape including that of an optical scanbody which is particularly devised for an optimal optical scanning or that of a body devised for taking a physical imprint. In fact, the virtual scanbody of the present invention is required to have a shape suitable for encoding the relevant information on the underlying implant. If the manufacturing process still shall be based on an i-Tero model, for instance, any kind of virtual scanbody, as described above, can be used. However, the use of a standard optical scanbody is the preferred option, as in this case the data obtained is standardized and does not need any further conversion.

The present inventive method and the device enable the dentist to undertake a very time- and cost-efficient treatment for the implantation of the dental implant and an instant insertion of the provisional or final prosthesis during a single treatment session.

Further advantageous aspects of the invention are set out in the following detailed description.

The invention is set forth and characterized in the independent claims, while dependent claims describe other advantageous characteristics of the invention.

One solution of a preferred embodiment according to the present invention is disclosed in the following drawings and in the detailed description but it shall not be limiting the invention.

### Brief description of the drawings

Fig. 1 is an image representing the volume scan data of an upper jawbone with three teeth and a cavity in-between caused by a missing tooth.
Fig. 2 is an image of a cross section of the virtual 3D surface scan data of the upper jaw with the three teeth and the cavity in-between caused by the missing tooth.
Fig. 3 is an image of the first virtual data which is a registered data set of the volume scan data according to Fig. 1 and of the 3D surface scan data according to Fig. 2.
Fig. 4 is an image of the second and third virtual data which is the same registered data set as in Fig. 3, but with an additional planned virtual dental implant (second virtual data) and with a virtual scanbody (third virtual data) associated with the virtual dental implant.
Fig. 5 is an image of the fourth virtual data comprising the 3D surface scan data and the virtual scanbody data.
Fig. 6 is a diagram for manufacturing of the provisional prosthesis according to a preferred method of the invention.
Fig. 7 is an image of the fifth virtual data.
Fig. 8 is an image of the data of Fig. 7, wherein the virtual scanbody has been removed and the provisional or final prosthesis has been designed and associated with the virtual dental implant.

### Detailed description of a preferred embodiment of the invention

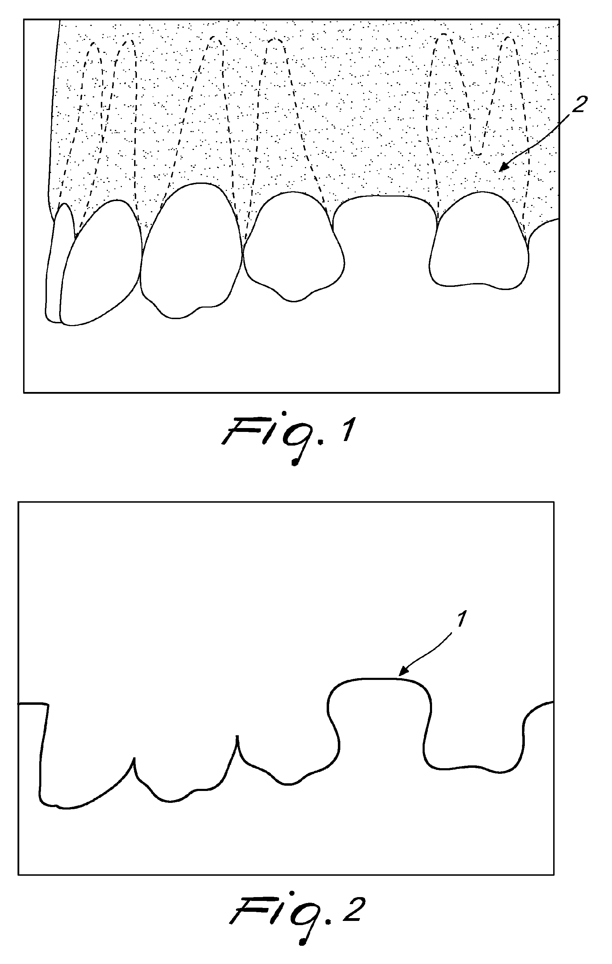

The following description in conjunction with Fig. 1 - Fig. 8 depicts an example of a patient's upper jawbone with three remaining teeth and a cavity in-between caused by a missing tooth which shall be replaced by a dentist by a respective dental implant with a prosthesis connected thereto. It should be noted that in the context of the present invention a dental prosthesis (or sometimes simply prosthesis) is intended to designate both a final dental prosthesis and a provisional dental prosthesis.

Fig. 1 depicts an image of volume scan data 2 of an area of interest of the patient's jawbone, which is provided by a radiological scanner, which is preferably a three-dimensional CT or DVT scanner. The volume scans data 2 shows the bone density of the respective part of a patient's jawbone. Instead of the volume scan data 2 one or more cross section data of other radiological images or of NMR data can also be used providing information about the shape and density of the jawbone with blood vessels and nerves therein.

The volume scan data 2 enables the dentist to exactly plan the position and direction of the dental implant as well as the suitable type of dental implant which shall be inserted afterwards within the jawbone. Usually after the planning of the position and direction of the dental implant, the resulting data, comprising the volume scan data 2 and the position and direction of a virtual dental implant as well as the type of dental implant, is then output for manufacturing of a respective drilling template. The drilling template provides the dentist with a guiding tool for an exact drilling of a bore, such that upon drilling of the bore in a guided manner the inserted dental implant has the planned position and direction in the jawbone. The foregoing method for planning the insertion of the dental implant into the patient's jaw avoids a damaging of nerves or blood vessels and a wrong placement in weak zones of the jawbone, namely the zones having an insufficient bone density. However the volume scan data 2 does not provide a sharply defined surface of the teeth, such that further steps have to be undertaken to achieve a good fit of the drilling template to the real teeth afterwards.

Fig. 2 depicts 3D surface scan data 1 of the same respective area of interest of the jaw as in Fig. 1. The 3D surface scan data 1 is provided by any conventional three-dimensional scanner, such as by an optical scanner manufactured by Institut Straumann AG or by CADENT Ltd., the three-dimensional scanner scanning a surface of the teeth and gum within the respective area of interest. Before the actual scanning with the scanner a suitable powder is preferably sprayed onto the surface which is to be scanned, wherein the powder has highly reflective characteristics. The 3D surface scan data 1 shows the same remaining teeth and the cavity in-between as in Fig. 1.

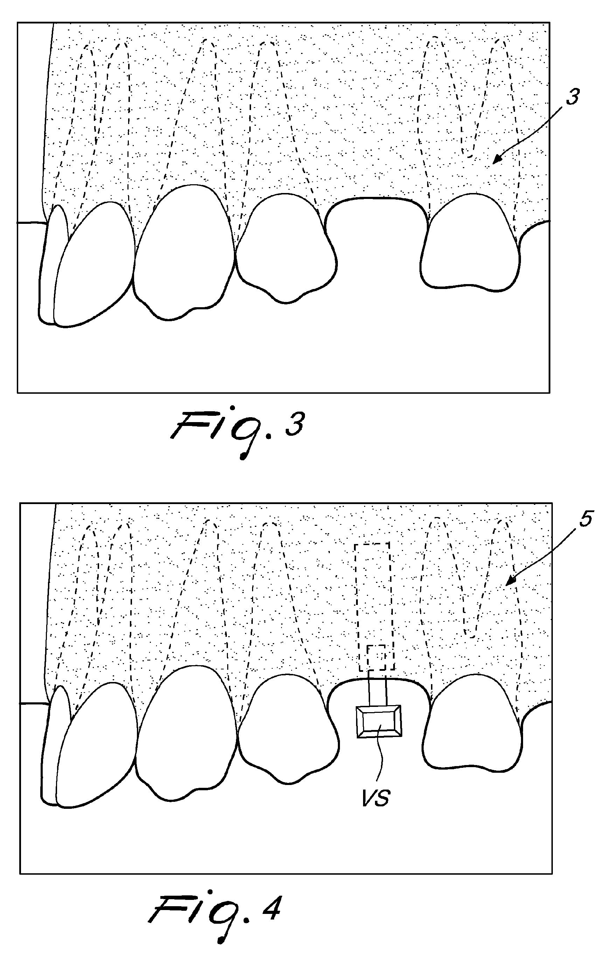

Fig. 3 shows an image of the first virtual data 3 which is a registered data set of the 3D surface scan data 1 and the volume scan data 2 of Fig. 2 and Fig. 1, respectively. The registration provides for data of the density of the jawbone and exact surface data of the teeth and gum. Such a registration of the data is made in order to achieve a sharp and precise surface of the teeth and gum within the treatment zone as well as to provide the information about the planned position and direction of the dental implant, as described above, with regard to the surface of the respective teeth and gum. Thus, using the first virtual data 3 (which is commonly used for the manufacturing of drilling templates as described above) leads to a higher precision and an exact fit to the teeth. Software tools for such a registration of the 3D surface scan data 1 and the volume scan data 2 are available and known in the art of digital dentistry, for instance CARES ® VISUAL of Institut Straumann AG.

Fig. 4 is an image of the second and third virtual data 5 comprising the first virtual data 3 of Fig. 3, the planned virtual dental implant (second virtual data) and a virtual scanbody VS (third virtual data) which is associated with the virtual dental implant. The virtual dental implant is planned and positioned as described above, for instance by use of the software CARES ® VISUAL of Institut Straumann AG or other software tools. Alternatively, the virtual dental implant can be positioned manually or semi-automatically. The virtual scanbody VS associated with the virtual dental implant advantageously provides for a simulation of a post-operative situation. In the post-operative situation, upon the insertion of the dental implant preferably a real scanbody is coupled to the dental implant in order to be scanned in the mouth of the patient by the optical surface scanner providing therewith post-operative 3D surface scan data representing an imprint of the jaw comprising information about a real position, direction and rotation of the dental implant implanted in the jaw as well as the type of implant (standard, wide neck, regular neck and the like). The virtual scanbody VS within the first virtual data 3 would match exactly, as regards the respective position and direction in the jaw, the real scanbody in the case in which the implant would be placed exactly in the planned position and with the planned orientation. This is in reality hardly feasible, for instance because of manual unplanned forces during the drilling and the inserting of the dental implant, thus resulting in deviations. Therefore, if a prosthesis 9 (be it provisional or final) is manufactured from the data derived from the third virtual data as in Fig. 4, deviations are likely but they are small enough to be acceptable in a real life situation. As the rotational position of the dental implant can be hardly exactly planned, the prosthesis 9 should be advantageously designed in such a manner that it can be adapted to the real rotational position of the dental implant. The exact planning of the rotational position of the dental implant is imaginable by means of special tools for the insertion of the dental implant in the jawbone. One of the special tools could be envisaged to be a robotic screwdriver and/or a robotic arm, or a certain insertion template for the dental implant.

Having in mind that conventional prior art methods and tools are already available for manufacturing the prosthesis 9 derived from the post-operative 3D surface scan data, virtual data comprising the 3D surface scan data 1 and the virtual scanbody VS according to the invention can be used to do the same.

Preferably, the virtual scanbody VS is devised as a real scanbody such as a scanbody used for the conventional manufacturing of a prosthesis, as described hereinabove with respect to the post-operative situation. Preferably the virtual scanbody VS is selectable within the CAD software from a set representing real scanbodies, wherein the virtual scanbody has the same dimensions, shapes and interfaces to the dental implant as a respective real scanbody. The latter facilitates the input of data into an already existing CAD software, as the virtual scanbody VS has a standardized configuration. The CAD software can be any software tool or module designed for the purpose of an execution of the method steps according to the invention. The CAD software may be user-interactive or fully automatic or semi-automatic.

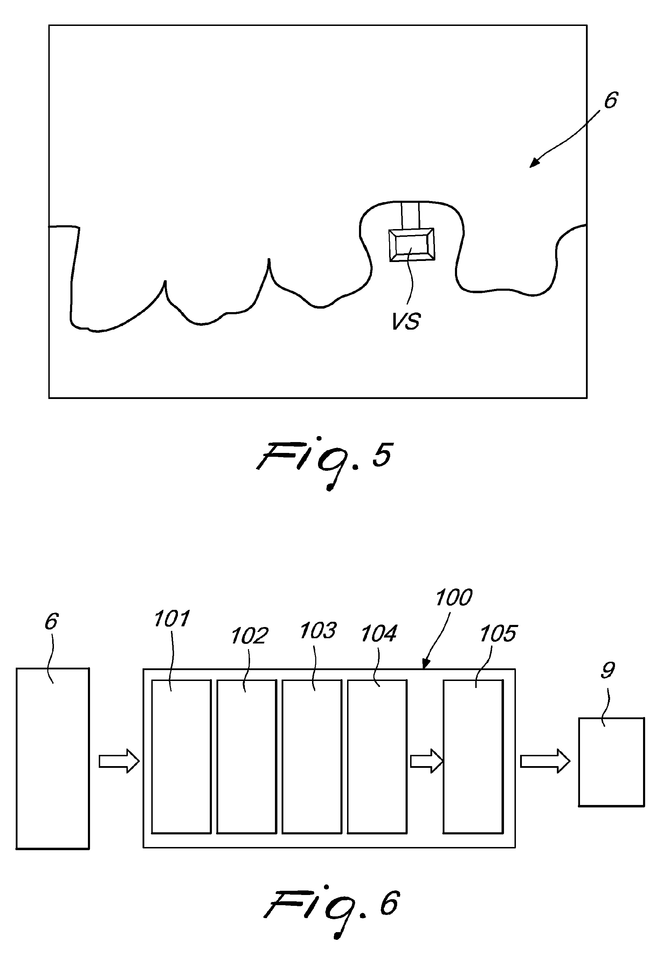

Fig. 5 shows the fourth virtual data 6 which is derived from the third virtual data 5 by subtraction of the volume scan data 2 and the virtual dental implant. Thus, the fourth virtual data 6 comprise the 3D surface scan data 1 and the virtual scanbody VS, simulating the post-operative 3D surface scan data. The fourth virtual data 6 is preferably provided by means of the CAD software described above. The fourth virtual data 6 is preferably provided in a standard data format, such as for instance Cares ® Visual of Institut Straumann AG, i-Tero of Cadent Lrd. or another conventional data format. Alternatively, a conversion to a standard data format can also be provided.

Fig. 6 shows a diagram of a preferred method 100 for further processing and for the production or manufacturing, respectively, of the prosthesis 9.

In a method step 101 the fourth virtual data 6 is input and at least an interface structure of the virtual implant is derived from the virtual scanbody data of the fourth virtual data 6. In this manner fifth virtual data is obtained. Alternatively, the full data of the virtual implant is derived from the virtual scanbody data of the fourth virtual data 6 for yielding the fifth virtual data. Basically the method step 101 shall only provide the necessary information for generating the interface for the prosthesis 9.

A following preferred method step 102 removes the virtual scanbody VS from the fifth virtual data. It should be borne in mind in this context that the only task of the virtual scanbody VS was to represent the position and direction of the virtual dental implant as well as the type thereof. Upon removal of the virtual scanbody VS sixth virtual data is obtained. Instead of removing the virtual scanbody VS it is also imaginable to make the respective data transparent to a certain extent.

Preferably, the following method step 103 envisages connecting an abutment to the virtual dental implant or to the respective interface, obtaining seventh virtual data.

Now in a following method step 104 the prosthesis 9 is designed either automatically or user-interactively or semi-automatically. The prosthesis 9 is preferably adapted to suit the envisaged abutment and the virtual imprint data of the patient's jaw, obtaining data of the prosthesis 9.

In a following method step 105 the prosthesis 9 is preferably manufactured with a CAM machine, obtaining the provisional or the final prosthesis 9 as planned.

Instead of associating the prosthesis 9 with an abutment which is associated in turn with the virtual dental implant, it is also imaginable to associate the prosthesis 9 directly with the virtual dental implant. Nevertheless, the abutment option is preferable, as it also provides for a rotational adaptability which might be useful for an insertion and good fit in the patient's mouth. The provision of a prosthesis 9 which fits in all rotational positions within the patient's mouth is also imaginable if the prosthesis and the dental implant have suitable interfaces.

In a further preferred variation, all above method steps 101 to 105 can be used in a post-operative situation which includes post-operative surface scan data with a scanbody thereon.

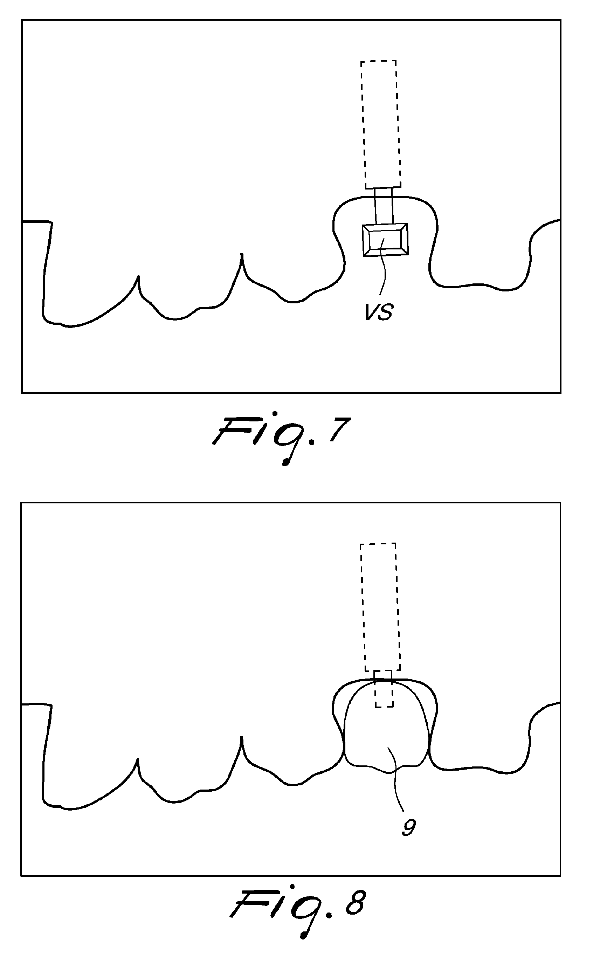

Fig. 7 is a representation of the fifth virtual data according to Fig. 6, comprising the 3D surface scan data and the virtual scanbody data, wherein the virtual dental implant is virtually reconstructed.

Fig. 8 is a representation of the data of the provisional or final prosthesis 9 according to Fig. 6.

According to an advantageous aspect, the present invention also allows the receiving of the 3D surface scan data 1 and/or of the volume scan data 2 via an external or internal memory device, via data exchange over a cable, an FTP Server or via the Internet or the like.

According to yet another advantageous aspect, the present invention enables the selection of a virtual scanbody VS from a library, wherein the library is accessible directly in a respective computer program, via a computer network, via the FTP Server or via the Internet.

Moreover, the present invention advantageously allows also the manufacturing of a prosthesis comprising the following steps:
- manufacturing a physical model of the virtual imprint of the dentition with the upper jaw and the lower jaw and with the gum according to the fourth virtual data 6;
- inserting an implant analog within the physical model, such that the implant analog (which is preferably designed as a repositionable implant analog as described in DE 10 2010 021 601 A1) fits the position of the virtual scanbody VS within the fourth virtual data 6;
- connecting preferably a respective abutment to the implant analog within the physical model;
- producing the prosthesis based on the abutment and the fourth virtual data 6 or based on the interface of the virtual dental implant or the virtual scanbody VS, respectively.

The present invention also advantageously provides for registering the 3D surface scan data 1 with the volume scan data 2 based on the determination of an iso-surface with a same bone density within the volume scan data 2, such that the iso-surface of the volume scan data 2 is aligned and registered with the 3D surface scan data 1.

According to another advantageous aspect the present invention allows the registering of the 3D surface scan data 1 with the volume scan data 2 based on a landmark alignment between first landmarks in the 3D surface scan data 1 and second landmarks within the volume scan data 2 (not shown in the drawings), wherein the first and the second landmarks are located at the same respective positions with respect to the patient's dentition, and wherein the alignment takes place automatically, manually or semi-automatically.

Moreover, the present invention allows also the provision of a CAD software tool or CAD software module as well as of a computer guided device for the execution of the aforementioned steps.

Moreover, the present invention allows preferably the selection of different kinds of pre-stored virtual dental implants and/or virtual scanbodies from a library.

Furthermore, although the present invention has been described in connection with certain specific method steps or embodiments for instructional purposes, the present invention is not limited thereto. Accordingly various modifications, adaptations and combinations of various features of the described method steps or embodiments, respectively, can be practiced without departing from the scope of the present invention as set forth in the accompanying claims.

Where technical features mentioned in any claim are followed by reference signs, those reference signs have been included for the sole purpose of increasing intelligibility of the claims and accordingly, such reference signs do not have any limiting effect on the scope of each element identified by way of example by such reference signs.

### List of Reference Numerals

- 1: 3D surface scan data
- 2: volume scan data
- 3: first virtual data
- 4: second virtual data
- 5: third virtual data
- 6: fourth virtual data
- 100-105: method steps
- VS: virtual scanbody

## Claims

1. Method for manufacturing a dental prosthesis (9) for a dental implant, comprising the following steps:
a) receiving 3D surface scan data (1) from a scanning of a surface of a patient's oral cavity in an area of interest for a treatment representing a virtual imprint of a dentition;
b) receiving volume scan data (2) of a respective upper or lower jaw within the area of interest for the treatment, wherein the volume scan data (2) represents a density of a respective jawbone and surrounding tissue;
c) registering the 3D surface scan data (1) with the volume scan data (2), obtaining first virtual data (3) representing a virtual 3D model of the area of interest for the treatment;
d) selecting a virtual implant and virtually planning or positioning, respectively, the virtual implant within the first virtual data (3) representing the virtual 3D model, such that the virtual 3D model comprises the virtual implant, obtaining second virtual data (4);
e) selecting a virtual scanbody (VS) and virtually associating the virtual scanbody (VS) with the top of the virtual implant within the second virtual data (4), such that the virtual 3D model comprises furthermore the virtual implant and the virtual scanbody (VS), obtaining third virtual data (5);
f) virtually removing the virtual implant and the volume scan data (2) and extracting information relative to the virtual scanbody (VS) and the 3D scan surface from the third virtual data (5) such as to obtain fourth virtual data (6) representing merged information of the 3D surface scan data (1) and of the virtual scanbody (VS); and
g) providing the fourth virtual data (6) for the design of the prosthesis (9) according to the fourth virtual data, wherein the prosthesis (9) can be designed based on information incorporated by the virtual scanbody (VS) by use of a suitable CAD software.

2. Method according to claim 1, further comprising the manufacturing of the prosthesis (9) following the design step g).

3. Method according to claims 1 or 2, wherein the volume scan data (2) is three-dimensional CT or DVT data, one or more cross section data of the radiologically scanned respective jawbone, or NMR data, the data representing the respective jawbone and tissue density in the area of interest for the treatment.

4. Method according toone or more of the preceding claims, wherein the receiving of the 3D surface scan data (1) and/or the volume scan data (2) occurs either via an external or internal memory device, via data exchange over a cable, an FTP Server or via the Internet.

5. Method according to one or more of the preceding claims, wherein in step e) the virtual scanbody (VS) is selected from a pre-stored library and is placed automatically, manually or semi-automatically within the second virtual data (4), wherein the pre-stored library is accessible directly in a respective computer program, via a computer network, via the FTP Server or via the Internet.

6. Method according to one or more of the preceding claims, wherein in step f) the fourth virtual data (6) is provided in a standard data format or is converted into a standard data format, the standard data format being preferably a "Cares Visual" ® data format, an i-Tero ® data format or the like.

7. Method according to one or more of the preceding claims 1-6, wherein step g) furthermore comprises the following steps:
- determining a position of the virtual scanbody (VS) within the fourth virtual data (6) and reconstructing the virtual implant based on the virtual scanbody (VS), obtaining fifth virtual data;
- removing the virtual scanbody (VS), obtaining sixth virtual data;
- selecting and associating a virtual abutment with the virtual implant within the sixth virtual data, obtaining seventh virtual data;
- designing the prosthesis (9) by adapting it to the virtual abutment and to the virtual imprint of the 3D surface scan data (1) taking into account occlusal surface data, for obtaining data of the prosthesis (9);
- providing the data of the prosthesis (9) for the manufacturing of the prosthesis (9).

8. Method according to one or more of the preceding claims 1-6, wherein step g) furthermore comprises the following steps:
- determining the position of the virtual scanbody (VS) within the fourth virtual data (6) and reconstructing the virtual implant, obtaining fifth virtual data;
- removing the virtual scanbody (VS), obtaining sixth virtual data;
- designing the prosthesis (9) by adapting it to the virtual dental implant and to the virtual imprint of the 3D surface scan data (1) taking into account occlusal surface data, for obtaining data of the prosthesis (9);
- providing the data of the prosthesis (9) for the manufacturing of the prosthesis (9).

9. Method according to one or more of the preceding claims 1-6, wherein step g) further includes:
- manufacturing a physical model of the virtual imprint of the dentition with the upper jaw and the lower jaw and with the gum according to the fourth virtual data (6);
- inserting an implant analog within the physical model, such that the implant analog fits the position of the virtual scanbody (VS) within the fourth virtual data (6);
- connecting a respective abutment with the implant analog within the physical model;
- manufacturing the prosthesis (9) based on the abutment and the fourth virtual data (1).

10. Method according to one or more of the preceding claims, wherein the manufacturing of the prosthesis (9) is done by means of CAD/CAM technology.

11. Method according to one or more of the preceding claims, wherein in step c) the registering of the 3D surface scan (1) data with the volume scan data (2) includes determining an iso-surface with a same bone density within the volume scan data (2), such that the iso-surface of the volume scan data (2) is aligned and registered with the 3D surface scan data (1).

12. Method according to one or more of the preceding claims 1-11, wherein in step c) the registering of the 3D surface scan data (1) with the volume scan data (2) is based on a landmark alignment between first landmarks in the 3D surface scan data (1) and second landmarks within the volume scan data (2), wherein the first and the second landmarks are located at the same respective positions with respect to the patient's dentition, and wherein the alignment takes place automatically, manually or semi-automatically.

13. Method according to one or more of the preceding claims 1-12, wherein the prosthesis is a provisional or a final prosthesis.

14. A device being adapted to perform method steps according to one or more of claims 1-13, comprising:
- a CAD system comprising a computing device, a monitor, an input device, at least one interface for data exchange and a respective processing program,
wherein the CAD system and the processing program are adapted to:
- receive 3D surface scan data (1) of a surface of a patient's oral cavity in an area of interest for a treatment representing a virtual imprint of a dentition;
- receive volume scan data (2) of a respective jaw within the area of interest for the treatment;
- register the 3D surface scan data (1) with the volume scan data (2) either user input-assisted, automatically or semi-automatically, obtaining first virtual data (3) representing a virtual 3D model;
- allow a selection of a virtual implant and a positioning of the virtual implant within first virtual data (3) representing the virtual 3D model, obtaining second virtual data (4);
- allow a selection of a virtual scanbody (VS) and an association with the top of the virtual implant within the second virtual data (4), obtaining third virtual data (5);
- allow a removal of the virtual implant and the volume scan data (2) and an extracting of information relative to the virtual scanbody (VS) and the 3D scan surface from the third virtual data (5), such as to obtain fourth virtual data (6) representing merged information of the 3D surface scan data (1) and the virtual scanbody (VS); and
- export the fourth virtual data in a defined standard data format for the design of the prosthesis (9), wherein the prosthesis (9) can be designed based on information incorporated by the virtual scanbody (VS) by use of a suitable CAD software.

15. The device according to claim 14, wherein the data format of the fourth virtual data (6) is provided in a standard data format or is converted into a standard data format, the standard data format being preferably a "Cares Visual" ® data format, an i-Tero ® data format or the like.

16. The device of Claim 14 or 15, furthermore comprising:
- means for a CAD-CAM manufacturing of the prosthesis (9) according to the fourth virtual data (6).
